# EUROPEAN PATENT APPLICATION

(11) **EP 1 594 337 A2**
(43) Date of publication of application: **09.11.2005**
(21) Application number: 05015391.5
(22) Date of filing: 21.12.2001
(51) Int. Cl.: H04Q 7/38

(54) **A terminal-based service identification mechanism**

(30) Priority: 30.11.2001 EP 01403081
(62) Divisional of application: 01403335.1
(71) Applicant: MOTOROLA, INC., Schaumburg, IL 60196 (US)
(72) Inventor: Mokhtar, Ahmed, 35700 Rennes (FR); Olivereau, Alexis, Motorola Centre de Recherche, 91190 Gif-Sur-Yvette (FR)
(74) Representative: Gibson, Sarah Jane

(57) **Abstract**

A terminal-based service modification method (600) is provided for a wireless cell-based communication system (300). A roaming wireless subscriber terminal (330A) is assigned to a home domain cell (390) and roams into a visitor domain cell (370). The method includes the steps of modifying (630) a service profile of the roaming wireless subscriber terminal (330A) by the roaming wireless subscriber terminal (330A), transmitting (640) the modified service profile from the roaming wireless subscriber terminal to a server supporting the visitor domain cell (370), and receiving a change in a service or level of service (640, 465) provided to the roaming wireless subscriber terminal (330A) indicating the server having authorized the modified service profile.

This provides the advantages that signalling between the home domain and the visited domain is minimized whilst enabling a user to be dynamically authorized to use services or levels of service within the communication system (300).

## Description

### Field of the Invention

This invention relates to dynamic user authorization in a wireless cell-based communication system. The invention is applicable to, but not limited to, a terminal-based service identification and modification mechanism to access a service or level of service in such a system.

### Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs).

Wireless communication systems are distinguished over fixed communication systems, such as the public switched telephone network (PSTN), principally in that mobile stations move between BTS (and/or different service providers) and, in doing so, encounter varying radio propagation environments.

In a wireless communication system, each BTS has associated with it a particular geographical coverage area (or cell). A particular range defines the coverage area where the BTS can maintain acceptable communications with MSs operating within its serving cell. A subscriber unit registers with a particular cell (BTS), whenever roaming into (entering) a cell, so that calls can be routed to/from the subscriber unit. The network will assign a "home" cell to the subscriber unit, where the subscriber unit typically operates. The home cell then routes any calls, user profiles, preferences, etc. to any cell visited by the subscriber unit. Often these cells combine to produce an extensive coverage area.

Present day communication systems, both wireless and wireline, have a requirement to transfer data between communications units. Data, in this context, includes signalling information and traffic such as video and speech communication. Such data transfer needs to be effectively and efficiently provided for, in order to optimise use of limited communication resources.

Following the revolution in wireless (mobile) Internet access, new services and features are required to be supported by UEs. One such communication service relates to the authentication of the user, authorisation for the specific services or quality of service that the user requests and accounting for the usage of the communication resource/service by the UE, commonly referred to as "AAA" functions.

Communication systems are now being prepared according to a third generation of standards. Among 3^{rd} generation cellular standards are systems, such as the UMTS 3GPP and 3GPP2 standards of the European Telecommunications Standards Institute (ETSI) and the International Mobile Telecommunications-2000 (IMT-2000) standards, utilise communication protocols that support some Internet protocols and include AAA functions.

The preferred embodiment of the present invention is described with reference to the Third Generation Partnership Project (3GPP) defining portions of the Universal Mobile Telecommunication Standard (UMTS), including the time division duplex (TD-CDMA) mode of operation. In UMTS parlance, a BTS is referred to as a Node B, and subscriber equipment is referred to as user equipment (UE). With the rapid development of services provided to users in the wireless communication arena, UEs encompass many forms of communication devices, from cellular phones or radios, through personal data accessories (PDAs) and MP-3 players to wireless video units and wireless Internet units.

The memorandum published by the Internet Engineering Task Force organisation N° RFC2904 dated August 2000 entitled "AAA Authorization framework" presents the basic conceptual entities that may be allowed as participants in an authorization:
(i) A User who wants access to a service or resource;
(ii) A User Home Organization that has an agreement with the user and checks whether the user is allowed to obtain the requested service or resource. This entity may carry information required to authorize the User, which might not be known to the Service Provider (such as a credit limit);
(iii) A Service Provider's AAA Server, which authorizes a service based on an agreement with the User Home Organization without specific knowledge about the individual User. This agreement may contain elements that are not relevant to an individual user (e.g., the total agreed bandwidth between the User Home Organization and the Service Provider); and
(iv) A Service Provider's Service Equipment, which provides the service itself.

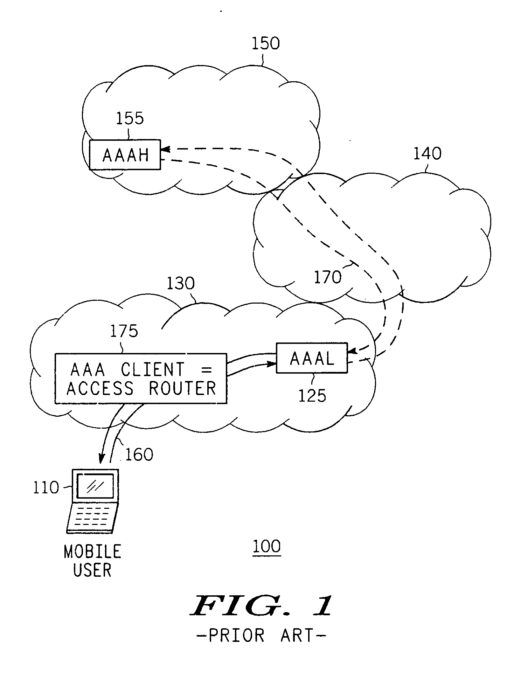

The existing Internet protocols are designed primarily to provide AAA functionality for wireline-based networks. Hence, the protocols are not well suited to wireless communication networks, particularly in servicing roaming mobile telephone/radio users. FIG. 1 of the accompanying drawings illustrates a known mechanism for providing wireless Internet access 100 to a roaming user 110. The roaming user 110 has been assigned to a home network 150 that includes a home AAA service provider 155. The roaming user 110 is shown as having roamed into a visited network 120, and needs to communicate through an AAA client 130 (for example an access router). A local AAA server 125 in the visited network 120 supports the AAA client.

It is known to perform AAA functions according to schemes in which both authentication and authorisation require two-way communication between the home AAA server 155 and the visited AAA server 125. The process for providing authentication and authorisation requires the roaming user 110 to provide its credentials to the local AAA client 175. The local AAA client 175 forwards the credentials to the local AAA server (AAAL, visited network AAA authority) 125 for authentication purposes.

The AAAL 125 recognizes that it is unable to authenticate that user, as the roaming user 110 does not belong to the domain that the AAAL 125 serves. The AAAL server 125 then forwards the credentials to the home network AAA server (AAAH) 155 over the Internet 140 for authentication purposes. The AAAH server 155 authenticates the credentials and sends a validation message to the AAAL server 125 in the visited network 120. The AAAL server 125 then forwards the authentication validation to the AAA client 175, and the roaming user 110 is then granted access to the visited network 120.

Unfortunately, such messaging between the roaming user 110, the local AAA server 125 and its home AAA authority 155 is not limited to happening only in the initial authentication request when a roaming user 110 roams into a visited network 120. For example, the AAAH server 155 is also involved for subsequent authorization requests, whereby the AAAL server 125 must make sure that it is correctly paid for the service requested by the roaming user 110. In this case, the inter-domain communication involves the AAAH 155, which knows the traffic profile subscribed by the roaming user 110.

Furthermore, such inter-domain communication is invoked for any authorization request for a specific service. Additionally, inter-domain communication is invoked for any authentication request that the AAAL server 125 may send to the roaming user 110. These supplementary authentication requests are likely to occur either periodically, or when the user requests access to a particular service.

The three distinct mechanisms described for Authorization (Agent Sequence, Push Sequence, Pull Sequence) in the above-mentioned memorandum N° RFC2904 all involve two-way communication with the AAAH 155. The memorandum entitled "AAA Local Security Association (LSA): The Temporary Shared Key (TSK)", published July 2001 by the Internet Engineering Task Force organisation, describes a mechanism to set up a Local Security Association (LSA) between a user and the visited network when the user is roaming. However, this proposal only provides the AAAH with the ability to delegate its authentication capability after it has already first authenticated the mobile user.

It will be appreciated that long delays may occur in the case of a roaming mobile user for authentication and/or authorization involving two-way communication (round-trip exchanges) with the home AAA server 155. This is especially the case when the visited network 120 is geographically,remote from the home network, and the round-trip exchanges of AAA messages may represent a substantial communication overhead that is particularly unsatisfactory in the case of wireless communications.

The inventors of the present invention have recognised that the current solutions to wireless Internet access for a roaming user, particularly in supporting AAA functionality, are focused on network-based processes. All the known solutions attempt to connect the visited network with an information base, either local or remote, to retrieve the user information. For example, a management information base (MIB) based solution requires all the visited domains to contact explicitly to the MIB to authenticate each visiting user's credentials/rights. Moreover, a MIB-based solution is statically configured and fails to adequately address the dynamic needs of a roaming user. The same comments apply equally to a policy information base (PIB) based solution, which can be considered as an MIB with different object-oriented structure.

A straightforward solution may be to establish a direct connection between the AAAL server 125 and the AAAH server 155. However, such a solution means that for each time a roaming user 110 moves to a new domain, there should be a communication between the AAAL server 125 and the AAAH server 155.

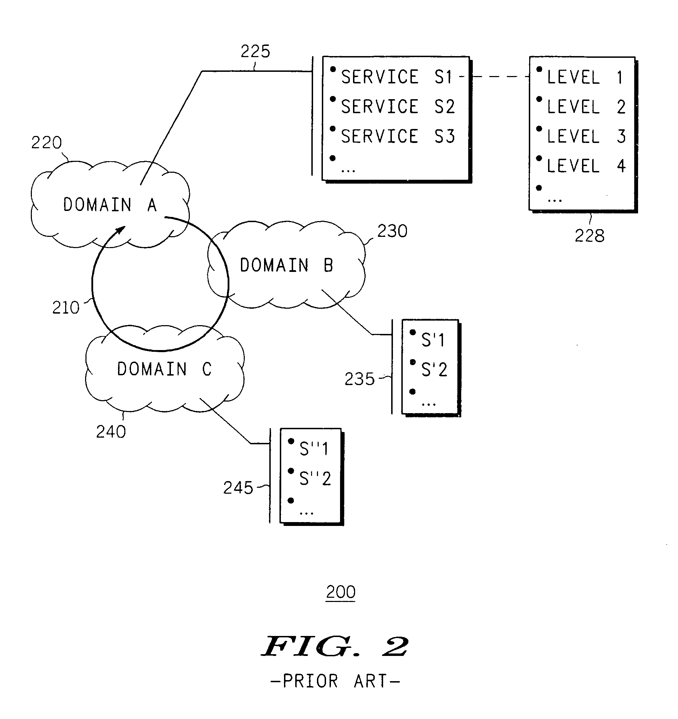

Furthermore, for dynamic changes of a user's service profile the only solution that currently exists is that the AAAH server 155 contacts the visited AAAL server 125 to update the user's information. A conceptual illustration of this is shown in FIG. 2. FIG. 2 illustrates the network communication 200 required to facilitate different operators, having differing administrative domains that provide differing services and levels of services. Three domains 220, 230, 240 are shown, with respective services 225, 235, 245 supported by each. Each service 225, 235, 245 has assigned to it multiple service levels 228 (shown only in relation to service database 225 for clarity purposes).

The inventors of the present invention have also recognised that the communication of such service or service level information 210 between the domains is a very inefficient mechanism that uses valuable communication resources. Additionally, it is a mechanism that is not readily scalable, and therefore causes both a high network load as well as a high AAAH load.

A need therefore exists for an improved service identification mechanism, preferably a terminal-based service identification mechanism, and a mechanism for supporting dynamic modification of service profiles, wherein the abovementioned disadvantages associated with prior art mechanisms may be alleviated.

### Statement of Invention

In accordance with a first aspect of the present invention there is provided a terminal-based service modification method, as claimed in claim 1.

In accordance with a second aspect of the present invention there is provided a wireless subscriber terminal, as claimed in claim 5.

In accordance with a third aspect of the present invention, there is provided a wireless communication system, as claimed in claim

Further aspects of the present invention are as claimed in the dependent claims.

In summary, the inventive concepts of the present invention provide for a mechanism to enhance the authorization capabilities of a server, for example an AAA server, by providing a service profiles database on the server that is based on a plurality of server's service profiles. A roaming wireless subscriber terminal contains a service profile indicator. The roaming wireless subscriber terminal transmits the service profile indicator to the visited server, where it is mapped against the service profiles database to determine a service or level of service to be provided to the roaming wireless subscriber unit.

In this manner, there is no need for the visited cell to communicate with the roaming wireless subscriber unit's home cell to determine the service or level of service to be provided, thereby avoiding substantial inter-cell communication.

Furthermore, a mechanism for a terminal to modify its service profile is described, whereby the modified service profile can be authenticated and authorized by a server in a visited communication cell.

### Brief Description of the Drawings

FIG. 1 illustrates a known mechanism for providing wireless Internet access to a roaming user.
FIG. 2 illustrates a known communication network arrangement required to facilitate different operators, having differing administrative domains that provide differing services and/or levels of services.

Exemplary embodiments of the present invention will now be described, with reference to the accompanying drawings, in which:
FIG. 3 illustrates a domain-based 3GPP communication system, adapted to support the inventive concepts of a preferred embodiment of the present invention.
FIG. 4 illustrates a mechanism for dynamically providing service profiles in accordance with a preferred embodiment of the present invention.
FIG. 5 shows a wireless communication unit (UE) adapted to employ the inventive concepts of the preferred embodiment of the invention.
FIG. 6 illustrates a mechanism for dynamically modifying service profiles in accordance with a preferred embodiment of the present invention.

### Description of Preferred Embodiments

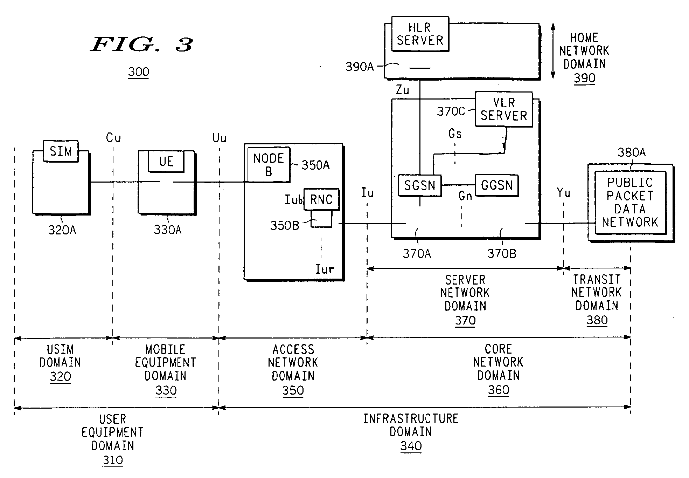

Referring first to FIG. 3, a UMTS communication system/network 300, in a hierarchical form, is shown. The communication system 300 is compliant with, and contains network elements capable of operating over, a UMTS and/or a general packet radio system (GPRS) air-interface. In particular, the invention relates to the Third Generation Partnership Project (3GPP) specification for wide-band code-division multiple access (WCDMA) standard relating to the home network/serving network interface (described in the 3G TS 25.xxx series of specifications).

The network is conveniently considered as comprising: a user equipment domain 310, made up of a user subscriber identity module (USIM) domain 320 and a mobile equipment domain 330; and an infrastructure domain 340, made up of an access network domain 350, and a core network domain 360, which is in turn made up of a serving network domain 370, a transit network domain 380 and a home network domain 390.

In the mobile equipment domain 330, a user equipment (UE) 330A receives data from a user SIM 320A in the USIM domain 320 via the wired Cᵤ interface. The UE 330A communicates data with a Node B 350A in the network access domain 350 via the wireless Uᵤ interface. Within the network access domain 350, the Node Bs 350A contain one or more transceiver units and communicate with the rest of the cell-based system infrastructure, for example radio network controller (RNC) 350B, via an I_{ub} interface, as defined in the UMTS specification.

The RNC 350B communicates with other RNCs (not shown) via the Iᵤᵣ interface. The RNC 350B communicates with a serving GPRS support node (SGSN) 370A in the serving network domain 370 via the Iᵤ interface. Within the serving network domain 370, the SGSN 370A communicates with a gateway GPRS support node (GGSN) 370B via the Gₙ interface, and the SGSN 370A communicates with a visitor location register (VLR) server 370C via the Gₛ interface. The SGSN 370A communicates with a home location register (HLR) server (190A) in the home network domain 390 via the Zᵤ interface. The GGSN 370B communicates with public data network in the transit network domain 380 via the Yᵤ interface.

The GGSN 370B (and/or SGSN) is responsible for UMTS (or GPRS) interfacing with a Public Switched Data Network (PSDN) 380A such as the Internet or a Public Switched Telephone Network (PSTN). The SGSN 370A performs a routing and tunnelling function for traffic within say, a UMTS core network, whilst a GGSN 370B links to external packet networks, in this case ones accessing the UMTS mode of the system.

Thus, the elements RNC 350B, SGSN 370A and GGSN 370B are conventionally provided as discrete and separate units (on their own respective software/hardware platforms) divided across the access network domain 350 and the serving network domain 370.

The RNC 350B is the UMTS terrestrial radio access network (UTRAN) element responsible for the control and allocation of resources for numerous Node Bs 350A; typically 50 to 100 Node Bs may be controlled by one RNC 350B. The RNC 350B also provides reliable delivery of user traffic over the air interfaces. RNCs communicate with each other (via the Iᵤᵣ interface) to support handover and macro-diversity.

The GGSN 370B is the UMTS Core Network element responsible for concentrating and tunnelling user data within the core packet network to the ultimate destination (e.g., an Internet service provider (ISP)).

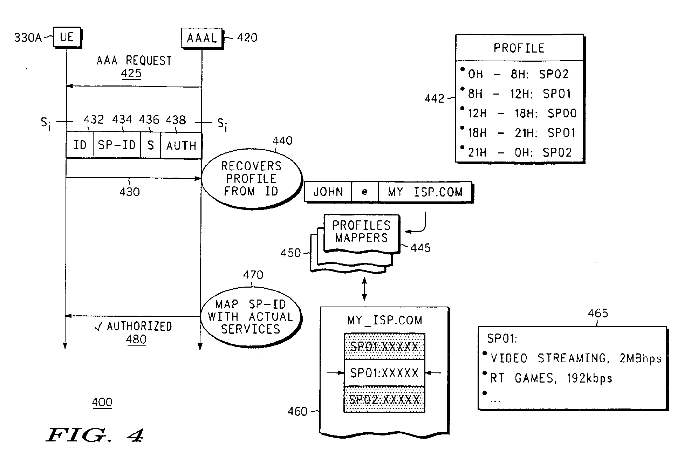

The SGSN 370A is the UMTS Core Network element responsible for Session Control and interface to the Location Registers (HLR and VLR). The SGSN is a large centralised controller for many RNCs. In accordance with the preferred embodiment of the present invention, the SGSN 370A, together with one or more VLR server 370C and HLR server (390A), has been adapted to support the inventive concepts herein described and reduce the amount of signalling passed across the Gₛ and Gₙ interfaces. The operation of the SGSN 370A, VLR server 370C and HLR server (390A) according to the preferred embodiment of the present invention are further described with respect to FIG. 4.

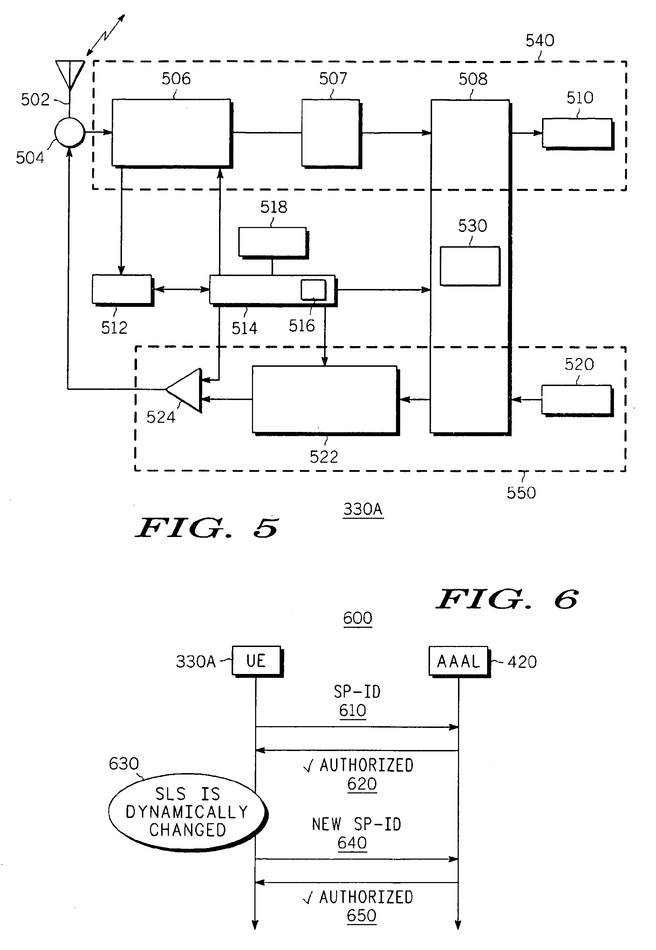

Furthermore, in the preferred embodiment of the invention, at least one UE 330A has been adapted to store, process and transmit a dynamic service profile (SP) indicator relating to AAA messages to a VLR server 370C. The UE 330A according to the preferred embodiment of the present invention is further described with respect to FIG. 5 and FIG. 6. The roaming wireless subscriber terminal transmits the service profile indicator to the visited server, where it is mapped against a service profiles database of a server of a visited cell to determine a service or level of service to be provided to the roaming wireless subscriber unit.

In this manner, there is no need for the visited cell to communicate with the roaming wireless subscriber unit's home cell to determine the service or level of service to be provided, thereby avoiding substantial inter-cell communication.

Furthermore, a mechanism for a terminal to modify its service profile is described, whereby the modified service profile can be authenticated and authorized by a server in a visited communication cell.

In addition, at least one Node B 350A and RNC 350B have been adapted, to facilitate reception and processing of such a dynamic SP indicator relating to AAA messages.

More generally, the above adaptations may be implemented in the respective communication units in any suitable manner. For example, new apparatus may be added to a conventional communication unit, or alternatively existing parts of a conventional communication unit may be adapted, for example by reprogramming one or more processors therein. As such, the required adaptation may be implemented in the form of processor-implementable instructions stored on a storage medium, such as a floppy disk, hard disk, PROM, RAM or any combination of these or other storage multimedia.

In the case of other network infrastructures, implementation of the processing operations may be performed at any appropriate node such as any other appropriate type of base station, base station controller, GGSN, mobile switching centre (MSC), etc. Alternatively, the aforementioned steps may be carried out by various components distributed at different locations or entities within any suitable network or system.

Referring now to FIG. 4, a mechanism 400 for dynamically providing service profiles is illustrated, in accordance with a preferred embodiment of the present invention. In summary, the preferred mechanism enhances the authorization capabilities of an AAA server by providing a service profiles database on the AAAL 420.
Additionally a dynamic service profile (SP) indicator is provided in the UE 330A that has roamed into the communication cell served by the AAAL 420.

It is assumed that the AAAH of the HLR 390A and the AAAL 420 of the VLR 370A have a relationship that allows the AAAL 420 to maintain information about other AAA servers, for example:
(i) The AAAH service level specification (SLS) for each service provided by the visiting cell;
(ii) The AAAH SP initialisation parameters of one or more UEs; and
(iii) The AAAH users authentication data.

Furthermore, it is assumed that the AAAH will configure each of its (home-assigned) users to maintain any appropriate information/data corresponding to the relationship with other AAA servers. It is envisaged that such data may relate, for example, to services or levels of services provided at particular times of day. It is also envisaged that such information may be associated to a clock of a pseudo random number generator (PRNG) of the AAA server to authenticate the user and authorise the user with the SP that is indicated by the user.

In operation, a UE 330A moves from its home domain to another (visited) domain. The AAAL server 420 of the visited domain transmits an AAA request 425 to the UE 330A, to ascertain whether and, if so, what services or levels of service are available to the UE 330A.

The UE 330A transmits a service request message 430 to the AAAL server 420, as described in a co-pending EP patent application by the same Applicant, designated by the Applicant's ref: CR00545P. The service request message 430 includes a UE identifier (ID) 432, a service profile SP-ID 434 associated with the UE 330A, a codification signal Si 436 and an authorization code 438.

The AAAL server 420 extracts 440 a service level (SL) identifier/profile 445 from the SP-ID 434 that is transmitted in the service request message 430. The AAAL server 420 then matches the extracted SL identifier/profile 445 with the corresponding SL profile database 442. In the preferred embodiment of the present invention, such extraction and comparison will be effected using a number provided by the PRNG within the AAA server, to recover the original SL identifier profile of the UE 330A.

Note that the original SL identifier profile was protected by combining it with a corresponding number generated from the PRNG in the UE 330A, as also described in co-pending EP patent application by the same Applicant, designated by the Applicant's ref: CR00545P.

The AAAL server 420 then maps 450, 460 the number given to the SP associated with the AAAH of that UE 330A and determines 470 the service or level of service 465 that can be provided to, and charged for, that particular profile of the UE 330A. The AAAL server 420 then authorizes 480 the UE 330A for the correspondent service or level of service.

Preferably, each member AAA server shares with other AAA servers a service mapper 450, which maps a service profile identifier from the UE 330A, for example a one-byte code 460, with a corresponding service profile 465. One example of a service profile offered to a UE 330A could be video streaming at one Mbps, with a low quality voice communication link. Advantageously, no consistency is required between different mappings of different operators, since each AAA server's partner downloads the whole coding associated with the server profiles that the server partner offers. Furthermore, in accordance with the preferred embodiment of the present invention, the AAAL server 420 only maintains information about the different service profiles that exist with the AAAHs with which it has a relationship.

In the preferred embodiment of the present invention, the local operator has been adapted to decode the SP setting for the user session, as transmitted by the UE 330A. The adaptation will preferably take account of the SP setting dependent on the PRNG verification. Advantageously, there is no need for the AAAL server 420 to store information about each and every UE that may potentially roam into its area. This is a significant benefit, which results from the fact that information about the different service levels for each foreign domain are stored once for all users that belong to that domain. The only information needed to be stored in the AAAL server 420 is the SP parameter(s) of the respective AAAH. By implementing a PRNG verification scheme, as also described in co-pending EP patent application by the same Applicant, designated by the Applicant's ref: CR00545P, it is easy to authenticate the user and authorise him with the SP that he indicates.

In the preferred embodiment of the present invention, the impact on the home operator/AAAH is that the individual user configurations are stored inside the UE 330A, preferably within its SIM card in contrast to the AAAH. It is also envisioned that the AAAH may wish to modify remotely the SP of a UE if that user wishes to. This can be achieved by any number of means, for example over-the-air programming (OTAP), as known in the art.

Referring now to FIG. 5, a functional block diagram of a wireless communication unit 330A, for example a UE capable of operating in the 3GPP communication system 300, is shown adapted in accordance with the inventive concepts of the present invention. The UE 330A contains an antenna 502 coupled to a duplex filter, antenna switch or circulator 504 that provides isolation between the receiver chain 540 and transmit chain 550 within the UE 330A.

The receiver chain 540, as known in the art, may include scanning and/or switchable receiver front-end circuitry 506 (effectively providing reception, filtering and intermediate or base-band frequency conversion). The scanning front-end circuit is serially coupled to a signal processing function 508. An output from the signal processing function 508 may be provided to suitable output devices such as a display screen 510.

The receiver chain 540 also includes received signal strength indicator (RSSI) circuitry 512, which in turn is coupled to a controller 514 that operates to maintain overall control of the different functions and modules of the UE 330A. The controller 514 is also coupled to the scanning receiver front-end circuitry 506 and the signal processing function 508 (generally realised by at least one digital signal processor (DSP)). In accordance with the preferred embodiment of the present invention, the processing function 508 incorporates a pseudo random number generator 530 to assist in the UE verification/authorization process.

The controller 514 includes (or is operably coupled to) a memory element 516 that stores operating regimes, such as decoding/encoding functions and the like. A timer 518 is typically coupled to the controller 514 to control the timing of operations (transmission or reception of time-dependent signals) within the UE 330A.

As regards the transmit chain 550, this essentially includes an input device 520 such as a keyboard, keypad, microphone or the like. The input device is coupled in series through transmitter/modulation circuitry 522 and a power amplifier 524 to the antenna 502. The transmitter/modulation circuitry 522 and the power amplifier 524 are operationally responsive to the controller 514.

In accordance with the preferred embodiment of the present invention, the memory element 516 of the UE 330A has been adapted to store the user's profile information, for example different service levels subscribed to by the user. It is envisaged that such service levels provided to the user may be dependent on the day or time of day. Furthermore, the signal processor 508 and PRNG 530, in conjunction with the controller 514, timer 518 and transmit chain 550, have been adapted to generate service request messages that are combined with a random number generated by the PRNG 530, to ensure a secure transmission to the AAAL.

The current requested service level would be sent to the AAAL together with the number generated by PRNG 530 to assist in the verification process. Furthermore, a change to a Service Profile (in the case of multiple SPs), or a change of Service Level within a single SP (in the case of, for example, having a service attached to the day time) will directly affect the value of the SP that will be provided to the UE 330A. Such changes can be effected by selection of the appropriate PRNG number or may be included as various SP options stored in memory element 516.

It is within the contemplation of the invention that such a service request procedure and service profiles may be introduced to the UE 330A in the form of processor-implementable instructions and/or data.

It is within the contemplation of the invention that the processor 508 and/or controller 514 described in the above embodiments can be embodied in any suitable form of software, firmware or hardware. Furthermore, the various components within the UE 330A are realised in this embodiment in integrated component form. Of course, in other embodiments, they may be realized in discrete form, or a mixture of integrated components and discrete components, or indeed any other suitable form. Further, in this embodiment the controller 514 is implemented as a programmable processor, but in other embodiments can comprise dedicated circuitry or any other suitable form.

Additionally, the processor 508 and/or controller 514 may be controlled by processor-implementable instructions and/or data, for carrying out the methods and processes described, which are stored in a storage medium or memory, for example the memory 516. The memory can be a circuit component or module, e.g. a RAM or PROM, or a removable storage medium such as a disk, or other suitable medium.

Referring now to FIG. 6, a mechanism 600 for a user to dynamically modify a service profile in accordance with a preferred embodiment of the present invention is illustrated. It is within the contemplation of the invention that if the profile of the user indicates that, at a particular time, his service level (SL) will change, and then the UE 330A will automatically transmit a SL change request message 610 to the AAAL server 420. Alternatively, such a request may be initiated by the user, for example by selecting a service profile or level of service from a list contained with the SIM card of the UE 330A and displayed on the display 510.

In accordance with the preferred embodiment of the present invention, as described with respect to FIG. 4, the AAAL server 420 authorizes 620 the UE 330A as being able to modify the SL. Once authorization has been received, the UE 330A transmits the new SL demand 640 with a new SP-ID to the AAAL server 420. In response to the new SP-ID, the AAAL server 420 makes the same checks as before and grants 650 a new service level 630 to the UE 330A.

It is within the contemplation of the invention that a full list of available SPs may be stored in the UE 330A. As such, the user is provided with the ability to select or modify its SP in the same manner as described above with regard to SLs.

In this manner, the UE 330A is able to initiate new levels of service when having roamed into a visitor domain. It is within the contemplation of the invention that the UE user may be offered the facility to dynamically change the SL, presumably for a charge to be applied by the visiting domain operator.

It will be understood that the terminal-based service identification mechanism described above provides at least the following advantages:
(i) It minimizes the signalling between the home domain and the visited domain;
(ii) It provides dynamic SL/SP authorization of the user to access services;
(iii) It provides scalability, as the different visited domains do not need to keep information about each user. Only a key is needed;
(iv) It provides user selectable profile selection; and
(v) It provides an easy accounting model for roaming users.

It is within the contemplation of the invention that other communication systems could employ comparable techniques, for example utilise the aforementioned inventive concepts in selecting or modifying other user profiles or user priorities. Furthermore, other systems may implement remote servers in a different manner to the AAAL described above with respect to a 3GPP system, but still utilise the aforementioned inventive concepts.

Whilst the specific and preferred implementations of the embodiments of the present invention are described above, it is clear that one skilled in the art could readily apply variations and modifications of such inventive concepts.

Thus, an improved communication system, communication unit and method of facilitating AAA services have been described wherein the abovementioned disadvantages associated with prior art arrangements have been substantially alleviated.

## Claims

1. A terminal-based service modification method (600) for a wireless cell-based communication system (300), wherein a roaming wireless subscriber terminal (330A) assigned to a home domain cell (390) roams into a visitor domain cell (370), the method **characterised by** the steps of:
modifying (630) a service profile of said roaming wireless subscriber terminal (330A) by said roaming wireless subscriber terminal (330A);
transmitting (640) said modified service profile from said roaming wireless subscriber terminal to a server supporting said visitor domain cell (370); and
receiving a change in a service or level of service (640, 465) provided to said roaming wireless subscriber terminal (330A) indicating said server having authorized said modified service profile.

2. The terminal-based service modification method (600) according to claim 1, further **characterised by** the step of:
transmitting initially a service modification request (610) from said roaming wireless subscriber terminal (330A) to said server (420) to obtain authorization (620) for changing said service or level of service (640, 465) provided to said roaming wireless subscriber terminal prior to said step of transmitting (640) said modified service profile.

3. The terminal-based service modification method (600) according to claim 1 or 2, wherein said step of modifying is initiated automatically, for example in response to a day or time of day.

4. The terminal-based service modification method (600) according to any preceding claim, wherein said step of modifying a service or level of service (640, 465) to be made available to said roaming wireless subscriber terminal (330A) is user selectable.

5. A wireless subscriber terminal (330A) for communicating in a wireless cell-based communication system (300) wherein the wireless subscriber terminal (330A) is assigned to a home cell (390) and is capable of roaming into a visitor cell (370), the wireless subscriber terminal (330A) comprising:
a transmitter (550) for transmitting messages to a wireless communication server (420);
a memory element (516) operably coupled to said transmitter, said memory element (516) containing service profile information (434) related to said user; and
a processor (508) operably coupled to the memory element (516) and said transmitter (550) and configured to modify said service profile information automatically or in response to an user input, and to transmit the modified service profile information to a server (420) of a visitor cell (370) in order to request a change in a service or level of service from said server (420).

6. The wireless subscriber terminal (330A) according to claim 5, further comprising user input means (520) operably coupled to said processor to enable a user of said wireless subscriber terminal (330A) to modify said wireless subscriber terminal's (330A) service profile information (434) .

7. The wireless subscriber terminal (330A) according to claim 5, wherein the service profile information (434) is automatically modified, for example in response to a day or time of day.

8. The wireless subscriber terminal (330A) according to claim 5, 6 or 7 wherein said transmitter (550) transmits a request to said server (420) of said visitor cell (370) to modify a service or level of service (465) accessed from said server (420).

9. A wireless communication system (300) adapted to facilitate the method steps of any of claims 1-4.
